# EUROPEAN PATENT SPECIFICATION

(11) **EP 4 042 741 B1**
(45) Date of publication and mention of the grant of the patent: **11.02.2026**
(21) Application number: 20896679.6
(22) Date of filing: 02.12.2020
(51) Int. Cl.: H04W 88/14, H04W 60/04, H04W 60/00, H04W 48/02, H04W 88/06

(54) **METHOD AND APPARATUS FOR RECEIVING DOWNLINK DATA PACKETS OVER N3GPP ACCESS**
VERFAHREN UND VORRICHTUNG ZUM EMPFANGEN VON DOWNLINK-DATENPAKETEN ÜBER EINEN N3GPP-ZUGRIFF
PROCÉDÉ ET APPAREIL DE RÉCEPTION DE PAQUETS DE DONNÉES DE LIAISON DESCENDANTE SUR UN ACCÈS NON-3GPP

(30) Priority: 03.12.2019 IN 201941049681; 27.11.2020 IN 201941049681
(43) Date of publication of application: 17.08.2022
(73) Proprietor: Samsung Electronics Co., Ltd., Suwon-si, Gyeonggi-do 16677 (KR)
(72) Inventor: KUMAR, Lalith, Bangalore 560037 (IN); KUMAR, Anikethan Ramakrishna Vijaya, Bangalore 560037 (IN); TIWARI, Kundan, Bangalore 560037 (IN)
(74) Representative: Nederlandsch Octrooibureau
(86) International application number: PCT/KR2020/017489
(87) International publication number: WO 2021/112567

(56) References cited:
- US-A1- 2018 376 444
- US-A1- 2019 059 067
- HUAWEI ET AL: "Add attempt counter to Service Request procedure", vol. CT WG1, no. West Palm Beach, FL (USA); 20180820 - 20180824, 3 September 2018 (2018-09-03), XP051570557, Retrieved from the Internet <URL:http://www.3gpp.org/ftp/tsg%5Fct/TSG%5FCT/TSGC%5F81%5FGold%5FCoast/Docs/CP%2D182130%2Ezip> [retrieved on 20180903]
- OPPO: "UE in IDLE over non-3GPP access even when non-3GPP access is available", vol. SA WG2, no. Split, Croatia; 20191014 - 20191018, 3 October 2019 (2019-10-03), XP051801419, Retrieved from the Internet <URL:https://ftp.3gpp.org/Meetings_3GPP_SYNC/SA2/Docs/S2-1909212.zip S2-1909212-DP- ATSSS-paging-for-backed-off-N3GPP.DOC> [retrieved on 20191003]
- OPPO: "UE IDLE over N3GPP responding to indication of DL data when access is available", 3GPP DRAFT; S2-1911083, vol. SA WG2, 8 November 2019 (2019-11-08), Reno, Nevada, USA, pages 1 - 11, XP051821192
- OPPO: "UE in IDLE over non-3GPP access even when non-3GPP access is available", 3GPP DRAFT; S2-1909212-DP- ATSSS-PAGING-FOR-BACKED-OFF-N3GPP, vol. SA WG2, 3 October 2019 (2019-10-03), Split, Croatia, pages 1 - 3, XP051795332
- OPPO: "UE IDLE over N3GPP responding to indication of DL data when access is available", 3GPP DRAFT; S2-1911082, vol. SA WG2, 8 November 2019 (2019-11-08), Reno, Nevada, USA, pages 1 - 5, XP051821191

## Description

### Technical Field

Embodiments herein relate to data reception in Non- Third Generation Partnership Project (N3GPP) access, and more particularly to methods and apparatus for managing triggering Service Request procedures for reception of downlink data packets over N3GPP access.

### Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Currently, when a User Equipment (UE) in IDLE mode in Third Generation Partnership Project (3GPP) access intents to send Mobile Originating (MO) data to a network or receive Mobile Terminating (MT) data from the network (in response to a paging procedure), the UE can trigger a Service Request procedure to be in CONNECTED mode. The Service Request procedure involves the UE sending a Service Request message to the network. If the Service Request is accepted by the network, the UE can engage in data transfer. However, when the network is congested, the network may reject the Service Request and send a timer T3346 to indicate to the UE that the UE needs to refrain from sending further Service Requests prior to the expiry of the timer T3346. The UE can receive the timer T3346 in a Non-Access Stratum (NAS) signalling message and refrain from triggering the service request procedure prior to the expiry of the timer T3346. It may be noted that the UE may not intend to send MO data or receive MT data at the instance when the timer T3346 is expired. In such instance, the expiry of the timer T3346 is not a significant event for the UE and the UE does not trigger the service request procedure.

If the UE is registered on non-3GPP (N3GPP) access, the UE is always in CONNECTED mode and, hence, does not require triggering the service request procedure. The UE can send MO data or receive MT data at all times given the user plane resources are already active. If the UE moves out of N3GPP access coverage area, the UE comes to the IDLE mode. The UE may initiate a Service Request procedure if the UE detects that 3GPP access is available outside the N3GPP coverage area. However, if the network is congested, the UE may not be able to send MO data or receive MT data (due to triggering of T3346 timer by the network) on N3GPP access, even if the UE returns to the N3GPP access coverage area.

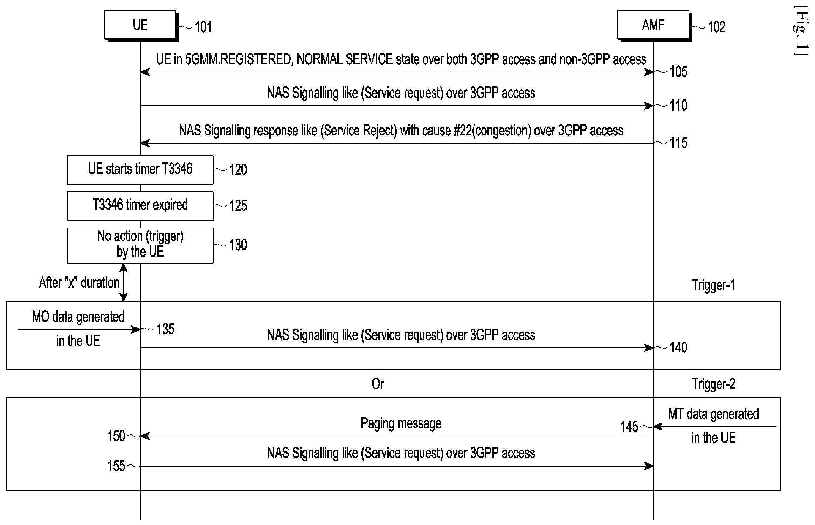

FIG. 1 is a sequence diagram depicting the triggering of service request by the UE only for sending MO data packets to the Access and Mobility Function (AMF) or for receiving MT data packets from the AMF, after the expiry of the back-off timer (timer 3346).

Consider that the UE(101) is registered with a Fifth Generation (5G) communication network. The UE(101) is connected to the AMF(102), which is a core network element of the 5G communication network. The UE(101) is in 5GMM (5G Mobility Management) REGISTERED NORMAL SERVICE state(step 105).

As depicted in FIG. 1, the UE(101) sends a Service Request (a NAS signalling message) to the AMF(102) of the 5G communication network over 3GPP access(step 110). The AMF(102) of the 5G communication network sends a Service Reject (a NAS signalling response message) over 3GPP access(step 115). The NAS signalling response message includes the cause of rejection of the Service Request and a timer T3346 to indicate to the UE that the UE needs to back-off from sending further Service Requests prior to the expiry of the timer T3346. After receiving the NAS signalling response message, the UE starts the timer T3346(step 120).

At this instant, it is to be noted that the UE does not trigger a Service Request procedure after the expiry of the timer T3346(step 125, step 130). Further, after an 'x' time duration, the UE can trigger a Service Request procedure over 3GPP access only when the UE needs to send MO data packets to the 5G communication network(trigger-1) or when the UE needs to receive MT data packets from the 5G communication network(trigger-2).

In case of trigger-1, when the UE generates the MO data packets(step 135), the UE(101) sends the Service Request (the NAS signalling message) to the AMF(102) of the 5G communication network over 3GPP access to send the MO data packets(step 140).

In case of trigger-2, when the AMF(102) receives MT data intended for the UE(101)(step 145), the AMF(102) sends a paging message to the UE(101) over 3GPP access(step 150). In response to the paging message, the UE triggers the Service Request(step 155).

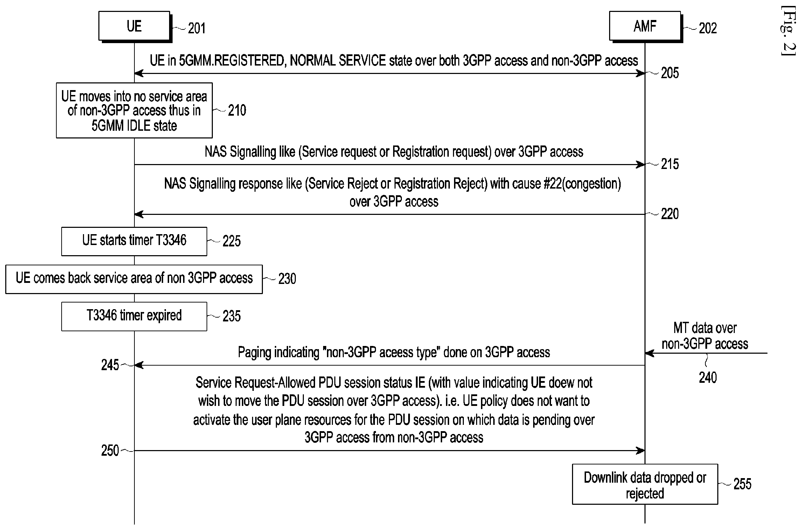

FIG. 2 is a sequence diagram depicting the rejection or dropping of downlink data packets by AMF due to non-reception of the downlink data packets by a UE.

As depicted in FIG. 2, consider that the UE(201) is registered with the 5G communication network. As the UE(201) is registered with the 5G communication network, the UE(201) is receiving 5GMM REGISTERED NORMAL SERVICE and is operating in 5GMM-CONNECTED mode over N3GPP access(step 205). Consider that the UE(201) has moved out of the service area over N3GPP access (coverage area of N3GPP access)(step 210).

Therefore, the UE(201) is in 5GMM-IDLE mode over N3GPP access. The UE(201) sends a Service Request or Registration Request (a NAS signalling message) to the AMF(202) of the 5G communication network over 3GPP access(step 215). Consider that the 5G communication network is congested. As such, the network may send a Service Reject or Registration Reject message (a NAS signalling response message) over 3GPP access(step 220). The NAS signalling response message includes a cause of congestion Information Element (IE) and a timer T3346 to indicate to the UE that the UE needs to back-off from sending further Service Requests prior to the expiry of the timer T3346. After receiving the NAS signalling response message, the UE starts the timer T3346(step 225).

Consider that the UE comes back within the coverage area of N3GPP access(step 230). The UE-NAS layer in the 5GMM-IDLE mode receives an indication, from the lower layers of N3GPP access, which informs that an access stratum connection has been established between the UE and the AMF. However, as the timer T3346 has not expired, the UE does not trigger a service request procedure over N3GPP access. The UE does not trigger a service request procedure over N3GPP access even if the timer T3346 expires, in case the UE does not have MO data to send. The UE triggers a Service Request procedure over N3GPP access, after the expiry of the timer T3346(step 235), when the UE needs to send MO data to the 5G communication network. Thus, the UE remains in 5GMM IDLE state over N3GPP access.

Prior to the UE triggering a Service Request procedure over N3GPP, if the AMF receives MT data intended for the UE(step 240), the AMF sends a paging message to the UE over 3GPP access(step 245). The paging message can be sent to the UE even if the Timer T3346 has not expired. The AMF can also send downlink NAS messages, apart from the paging message, such as downlink NAS TRANSPORT and messages for UE configuration update, even if the Timer T3346 has not expired.

When the AMF receives MT data intended for the UE over N3GPP access, the AMF sends a paging message with the access type set to N3GPP access over 3GPP access. This indicates that the AMF has received N3GPP MT data intended for the UE. The AMF, through the paging message, intends to determine a UE policy for reception of N3GPP downlink data packets over 3GPP access. The UE sends service request message over 3GPP access(step 250), in response to the paging message, wherein the service request message includes the policy that indicates to the AMF about the Protocol Data Unit (PDU) sessions of N3GPP access that are allowed by the UE to be converted to 3GPP access. The policy defines whether the UE has allowed a N3GPP PDU session, established for transfer of data over N3GPP access, to be shifted to 3GPP access. If the policy allows the PDU session to be shifted to 3GPP access and if data is pending to be delivered to the UE, then the PDU sessions are shifted to 3GPP access and the UE can receive N3GPP MT data over 3GPP access(Step 255). However, if the policy does not allow shifting the PDU session to 3GPP access, the AMF will be compelled to drop the N3GPP MT downlink data packets(step 255).

Thus, either the UE is unable to receive N3GPP MT downlink data packets over 3GPP access if the UE is in IDLE mode in the N3GPP coverage area, and the policy does not allow the PDU session to be shifted to 3GPP access; or unintentionally the PDU sessions are moved from N3GPP access to 3GPP access even though UE is in the N3GPP access coverage area.

3GPP draft document OPPO: "UE in IDLE over non-3GPP access even when non-3GPP access is available", S2-1909212, 20191018, 3 October 2019" discusses aspects related to cases when a UE is backed off over a non-3GPP access and incoming data arrives for the non-3GPP access QoS flows of a MA PDU Session.

### Disclosure of Invention

### Technical Problem

The scope of the invention is defined by the appended claims. Further embodiments of the invention are defined by the dependent claims.

The principal object of the embodiments herein is to disclose a method and an apparatus for managing the triggering of Service Request procedures by a User Equipment (UE) for receiving Mobile Terminating (MT) packets over Non-Third Generation Partnership Project (N3GPP) access.

Another object of the embodiments herein is to configure the UE to trigger a Service Request procedure if the UE detects that the UE is in N3GPP access coverage area, and if the UE detects that the UE is in Fifth Generation Mobility Management (5GMM)-IDLE mode over N3GPP access when a back-off timer has expired.

### Solution to Problem

Accordingly, the embodiments provide methods and apparatus for receiving Mobile Terminating (MT) packets, by a User Equipment (UE), over Non-Third Generation Partnership Project (N3GPP) access. In an embodiment, consider that the UE has moved out of N3GPP access service area. The UE can transition from Fifth Generation Mobility Management (5GMM)-CONNECTED mode to 5GMM-IDLE mode over N3GPP access when the UE moves out of N3GPP access coverage area or N3GPP service area. When the UE is in the 5GMM-IDLE mode (after the UE moving out of the N3GPP service area) the UE sends a service request (a Non-Access Stratum (NAS) signaling message) to a Fifth Generation (5G) communication network for sending Mobile Originating (MO) data and MT data over 3^{rd} Generation Partnership Project (3GPP) access. If the 5G communication network is congested, the 5G communication network, on receiving the service request (the NAS signaling message) from the UE, activates a back-off timer. The UE is prevented from sending further service requests prior to the expiry of the back-off timer. The UE remains in the 5GMM-IDLE mode.

Consider that the UE has returned to the N3GPP access service area. The embodiments include detecting that the UE is in the coverage area of N3GPP access. The embodiments include detecting that the UE is in 5GMM-IDLE mode over N3GPP access. Thereafter, the UE, in the 5GMM-IDLE mode over N3GPP access, can receive an indication from lower layers of N3GPP access, that an access stratum connection is established between the UE and the 5G network over N3GPP access. The embodiments include determining that the back-off timer is activated. The UE can trigger a service request procedure by sending a service request message (a NAS signaling message) to the 5G communication network, for receiving MT (downlink) data packets, after the expiry of the back-off timer, through N3GPP access.

These and other aspects of the embodiments herein will be better appreciated and understood when considered in conjunction with the following description and the accompanying drawings. It should be understood, however, that the following descriptions, while indicating embodiments and numerous specific details thereof, are given by way of illustration and not of limitation.

### Brief Description of Drawings

Embodiments herein are illustrated in the accompanying drawings, through out which like reference letters indicate corresponding parts in the various figures. The embodiments herein will be better understood from the following description with reference to the drawings, in which:
FIG. 1 is a sequence diagram depicting the triggering of service request by a User Equipment (UE) either for sending Mobile Originating (MO) data packets to an Access and Mobility Function (AMF) or for receiving Mobile Terminating (MT) data packets from the AMF;
FIG. 2 is a sequence diagram depicting the rejection or dropping of downlink data packets by the AMF due to non-reception of the downlink data packets by the UE;
FIG. 3 is a sequence diagram depicting the reception of the MT data packets over N3GPP access, by the UE, after the UE triggers a service request over N3GPP access, within the N3GPP coverage area, according to an embodiment as disclosed herein;
FIG. 4 is a block diagram of the UE according to an embodiment as disclosed herein; and
FIG. 5 is a block diagram of the AMF according to an embodiment as disclosed herein.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Embodiments herein disclose methods and apparatus for managing the triggering of Service Request procedure, by a User Equipment (UE), for receiving Mobile Terminating (MT) packets in a service area of Non-Third Generation Partnership Project (N3GPP) access. The UE can be configured to trigger a Service Request procedure if the UE is in the coverage area of N3GPP access, and if the UE is in Fifth Generation Mobility Management (5GMM)-IDLE mode over N3GPP access.

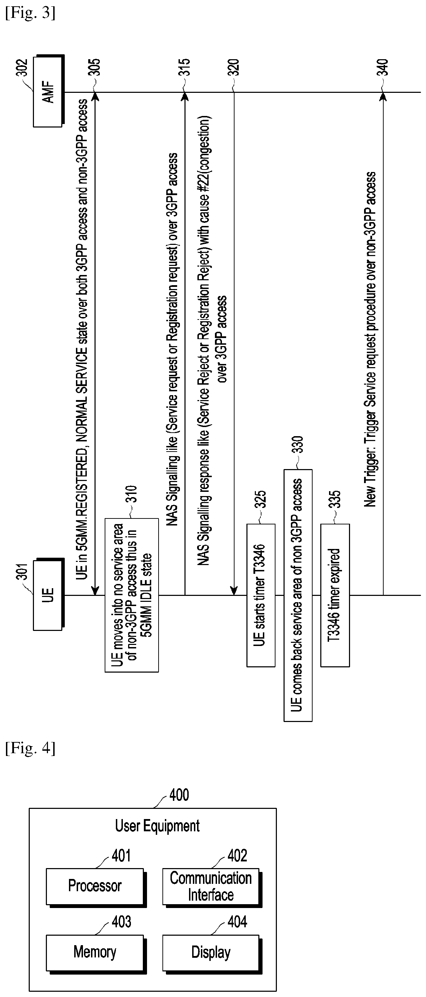

Referring now to the drawings, and more particularly to FIGS. 3 and 4, where similar reference characters denote corresponding features consistently throughout the figures, there are shown preferred embodiments.

FIG. 3 is a sequence diagram depicting the reception of the MT data packets over N3GPP access, by the UE, after the UE triggers a service request procedure over N3GPP access in the N3GPP coverage area, according to embodiments as disclosed herein.

As depicted in FIG. 3, the UE(301) is registered with an AMF(302), which is a core network element of the the 5G network, over 3GPP access and over N3GPP access. The UE(301) is in 5GMM REGISTERED NORMAL SERVICE state over 3GPP access and over N3GPP access(step 305). The UE(301) was in the service area of the N3GPP access network, and has moved out of the service area of the N3GPP access network(step 310). As the UE(301) moves out of the coverage area of the N3GPP access, the UE(301) is no longer connected to the AMF(302) through N3GPP access. The UE(301) is in 5GMM-IDLE mode over N3GPP access.

The UE(301) can determine that the UE(301) is in the coverage area of 3GPP access. Therefore, the UE(301) can send a Service Request or Registration Request to the AMF over 3GPP access. The UE(301) sends the Service Request (a NAS signalling message) over 3GPP access(step 315). Consider that the 5G network is congested. The AMF(302) sends a Service Reject or Registration Reject message (a NAS signalling response message) over 3GPP access(step 320), which includes a cause of rejection of the Service Request with a cause value #22 and a timer T3346.

After receiving the NAS signalling response from the AMF(302), the UE(301) starts the timer T3346(step 325) and determine, based on the cause value, that the 5G network is congested and that the UE(301) needs to back-off from sending further Service Requests prior to the expiry of the timer T3346. When the UE(301) comes back to the service area of N3GPP access(step 330), the UE(301) receives an indication. The indication informs the UE(301) that an access stratum connection has been established between the UE(301) and the 5G network(302).

The UE(301) determines whether the timer T3346 has expired. When the timer T3346 expires(step 335), the UE(301) triggers a Service Request procedure over N3GPP access(step 340). The UE(301) can send Service Request to the AMF(302) (a NAS signalling message). This allows the UE(301) to switch from the 5GMM-IDLE state over N3GPP access to 5GMM-CONNECTED state over N3GPP access, if the Service Request is accepted by the AMF(302). The UE(301) can receive MT data packets from the AMF over N3GPP access.

The back-off timer in this embodiment is for example timer T3346. There is coordination between 3GPP access and N3GPP access. The UE(301) performs the coordination between 3GPP access and N3GPP access, when the UE(301) is registered with same Public Land Mobile Network (PLMN) over both 3GPP access and N3GPP access. Therefore, the back-off timer is applied to both 3GPP access and N3GPP access. Otherwise, the back-off timer of 3GPP access is not applied to N3GPP access, and the back-off timer of N3GPP access is not applied to 3GPP access.

FIG. 4 is a block diagram of the UE according to an embodiment as disclosed herein.

As depicted in FIG. 4, the UE(400) includes a processor(401), a communication interface(402), a memory(403), and a display(404). Considered that the UE(400) is registered with the 5G network over 3GPP access and over N3GPP access. The UE(400) is in 5GMM REGISTERED NORMAL SERVICE state over 3GPP access and over N3GPP access. Consider that the UE(400) is initially in the service area of the N3GPP access network, and has moved out of the service (coverage) area of the N3GPP access network.

The processor(401) can detect the UE(400) has moved out of the service (coverage) area of the N3GPP access network. The processor(401) can determine that the UE(400) is in 5GMM-IDLE mode over N3GPP access. The processor(401) can send a Service Request or Registration Request, using the communication interface(402), to the 5G network through the 3GPP access network. In an embodiment, the processor(401) can send the Service Request (a Non-Access Stratum (NAS) signalling message), using the communication interface(402), over 3GPP access.

Consider that the 5G network is congested. As such, the processor(401) can receive, from the 5G network, a Service Reject or Registration Reject message (a NAS signalling response message) over 3GPP access using the communication interface(402). In an embodiment, the NAS signalling response message includes a cause of rejection of the Service Request in an Information Element (IE), which includes a cause value #22 (congestion) and a timer T3346. After receiving the NAS signalling response message, the processor(401) starts the timer T3346. The processor(401) can determine, based on the cause value, that the 5G network is congested and that the UE(400) needs to back-off from sending further Service Requests prior to the expiry of the timer T3346. The processor(401) refrains from sending Service Requests prior to the expiry of the timer T3346.

Consider that the UE(400) has come back within the coverage area of the N3GPP access network. The processor(401) can determine that the UE(400) is in the coverage area of the N3GPP access network (such as Wi-Fi network) on receiving an indication. The indication informs that an access stratum connection has been established between the UE(400) and the 5G network. The UE(400), in the 5GMM-IDLE mode, through the communication interface(402), receives the indication from the lower layers of N3GPP access.

The processor(401) can determine whether the timer T3346 has expired. The UE(400) does not trigger a service request procedure over N3GPP access prior to the expiry of the timer T3346. The processor(401) of the UE(400) triggers a Service Request procedure over N3GPP access, once the timer T3346 expires. The processor(401) sends the Service Request (a NAS signalling message) to the 5G network over using the communication interface(402). This allows the UE(400) to switch from the 5GMM-IDLE state over N3GPP access to 5GMM-CONNECTED state over N3GPP access, if the Service Request is accepted by the 5G network. The UE(400) can receive MT data packets over N3GPP access.

FIG. 4 shows exemplary units of the UE(400), but it is to be understood that other embodiments are not limited thereon. In other embodiments, the UE(400) may include less or more number of units. Further, the labels or names of the units of the UE(400) are used only for illustrative purpose and does not limit the scope of the invention. One or more units can be combined together to perform same or substantially similar function in the UE(400).

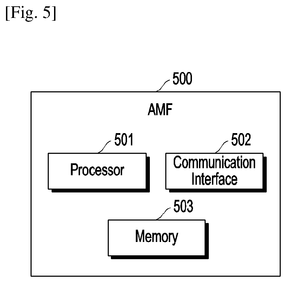

FIG. 5 is a block diagram of the AMF according to an embodiment as disclosed herein.

As depicted in FIG. 5, the AMF(500) includes a processor(501), a communication interface(502) and a memory(503). Considered that the UE is registered with the 5G network over 3GPP access and over N3GPP access. The UE is in 5GMM REGISTERED NORMAL SERVICE state over 3GPP access and over N3GPP access. Consider that the UE is initially in the service area of the N3GPP access network, and has moved out of the service (coverage) area of the N3GPP access network.

If the UE has moved out of the service (coverage) area of the N3GPP access network and the UE is in 5GMM-IDLE mode over N3GPP access, the processor(501) can receive a Service Request or Registration Request, using the communication interface(502), from the UE the 3GPP access network. In an embodiment, the processor(501) can receive the Service Request (a Non-Access Stratum (NAS) signalling message), using the communication interface(502), over 3GPP access.

Consider that the 5G network is congested. As such, the processor(501) can send, to the UE, a Service Reject or Registration Reject message (a NAS signalling response message) over 3GPP access using the communication interface(502). In an embodiment, the NAS signalling response message includes a cause of rejection of the Service Request in an Information Element (IE), which includes a cause value #22 (congestion) and a timer T3346.

Consider that the UE has come back within the coverage area of the N3GPP access network(such as Wi-Fi network) on receiving an indication. The indication informs that an access stratum connection has been established between the UE and the 5G network. The UE, in the 5GMM-IDLE mode, receives the indication from the lower layers of N3GPP access.

If the timer T3346 has expired, the UE(400) triggers a Service Request procedure over N3GPP access. The processor(501) receives the Service Request (a NAS signalling message) from the UE over using the communication interface(502). The processor(501) determines whether to accept the Service Request from the UE. If the Service Request is accepted by the AMF, this allows the UE to switch from the 5GMM-IDLE state over N3GPP access to 5GMM-CONNECTED state over N3GPP access. The processor(501) can send MT data packets over N3GPP access.

FIG. 5 shows exemplary units of the AMF(500), but it is to be understood that other embodiments are not limited thereon. In other embodiments, the AMF(500) may include less or more number of units. Further, the labels or names of the units of the AMF(500) are used only for illustrative purpose and does not limit the scope of the invention. One or more units can be combined together to perform same or substantially similar function in the AMF(500).

The embodiments disclosed herein can be implemented through at least one software program running on at least one hardware device and performing network management functions to control the network elements. The network elements shown in FIG. 3 include blocks which can be at least one of a hardware device, or a combination of hardware device and software module.

The embodiments disclosed herein describe methods and appratus for managing the triggering of Service Request procedures by the UE for receiving MT packets over N3GPP access. The UE is configured to trigger a Service Request procedure if the UE detects that the UE is in N3GPP access coverage area, and if the UE detects that the UE is in 5GMM-IDLE mode over N3GPP access. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in example Very high speed integrated circuit Hardware Description Language (VHDL), or any other programming language, or implemented by one or more VHDL or several software modules being executed on at least one hardware device. The hardware device can be any kind of portable device that can be programmed. The device may also include means, which could be, for example, a hardware means, for example, an Application-specific Integrated Circuit (ASIC), or a combination of hardware and software means, for example, an ASIC and a Field Programmable Gate Array (FPGA), or at least one microprocessor and at least one memory with software modules located therein. The method embodiments described herein could be implemented partly in hardware and partly in software. Alternatively, the invention may be implemented on different hardware devices, e.g. using a plurality of Central Processing Units (CPUs).

## Claims

1. A method of a user equipment, UE, the method comprising:
identifying that the UE is in idle mode over non-3rd generation partnership project, non-3GPP, access;
receiving, from the non-3GPP access, an indication indicating that an access stratum connection has been established between the UE and a network over the non-3GPP access;
identifying that a back-off timer is expired, wherein the back-off timer is a T3346 timer that was previously started in response to a service reject message over a 3GPP access, and
in response to the UE being in the idle mode, the indication, and the T3346 timer being expired, initiating a service request procedure by transmitting, to an access and mobility function, AMF, a service request message over the non-3GPP access,
wherein the T3346 timer is applied to both the 3GPP access and the non-3GPP access if the UE is registered with a same public land mobile network, PLMN, over both the 3GPP access and the non-3GPP access.

2. The method of claim 1, further comprising:
transmitting, to the AMF, an initial service request message before receiving the indication from the non-3GPP access; and
receiving, from the AMF, the service reject message if the initial service request message cannot be accepted.

3. The method of claim 2,
wherein the service reject message includes first information indicating that the network is congested and second information associated with the T3346 timer, wherein the second information is a back-off timer value.

4. The method of claim 3, further comprising:
starting the T3346 timer based on the second information associated with the T3346 timer.

5. A User Equipment, UE, the UE comprising:
a transceiver; and
a processor configured to:
identify that the UE is in idle mode over non-3rd generation partnership project, non-3GPP, access,
receive, from the non-3GPP access, an indication indicating that an access stratum connection has been established between the UE and a network over the non-3GPP access,
identify that a back-off timer is expired, wherein the back-off timer is a T3346 timer that was previously started in response to a service reject message over a 3GPP access, and
in response to the UE being in the idle mode, the indication, and the T3346 timer being expired, initiate a service request procedure by transmitting, to an access and mobility function, AMF, a service request message over the non-3GPP access,
wherein the T3346 timer is applied to both the 3GPP access and the non-3GPP access if the UE is registered with a same public land mobile network, PLMN, over both the 3GPP access and the non-3GPP access.

6. The UE of claim 5, wherein the processor configured to:
transmit, to the AMF, an initial service request message before receiving the indication from the non-3GPP access, and
receive, from the AMF, the service reject message if the initial service request message cannot be accepted.

7. The UE of claim 6,
wherein the service reject message includes first information indicating that the network is congested and second information associated with the T3346 timer, wherein the second information is a back-off timer value.

8. The UE of claim 7, wherein the processor configured to:
start the T3346 timer based on the second information associated the T3346 timer.

## Patentansprüche

1. Verfahren eines Benutzergeräts, UE, wobei das Verfahren Folgendes umfasst:
Identifizieren, dass sich das UE im Leerlaufmodus über einen Nicht-3GPP(Partnerschaftsprojekt der 3. Generation)-Zugang befindet;
Empfangen einer Anzeige, die anzeigt, dass eine Zugangsschichtverbindung zwischen dem UE und einem Netzwerk über den Nicht-3GPP-Zugang hergestellt wurde, von dem Nicht-3GPP-Zugang;
Identifizieren, dass ein Backoff-Timer abgelaufen ist, wobei der Backoff-Timer ein T3346-Timer ist, der zuvor als Reaktion auf eine Dienstablehnungsnachricht über einen 3GPP-Zugang gestartet wurde, und
als Reaktion darauf, dass sich das UE im Leerlaufmodus befindet, die Anzeige und der T3346-Timer abgelaufen sind, Initiieren eines Dienstanforderungsverfahrens durch Übertragen einer Dienstanforderungsnachricht über den Nicht-3GPP-Zugang an eine Zugangs- und Mobilitätsfunktion, AMF,
wobei der T3346-Timer sowohl auf den 3GPP-Zugang als auch auf den Nicht-3GPP-Zugang angewendet wird, wenn das UE bei demselben öffentlichen terrestrischen Mobilfunknetz, PLMN, sowohl über den 3GPP-Zugang als auch über den Nicht-3GPP-Zugang registriert ist.

2. Verfahren nach Anspruch 1, das ferner Folgendes umfasst:
Übertragen einer ersten Dienstanforderungsnachricht vor dem Empfangen der Anzeige von dem Nicht-3GPP-Zugang an die AMF; und
Empfangen der Dienstablehnungsnachricht von der AMF, wenn die erste Dienstanforderungsnachricht nicht akzeptiert werden kann.

3. Verfahren nach Anspruch 2,
wobei die Dienstablehnungsnachricht erste Informationen, die anzeigen, dass das Netzwerk überlastet ist, und zweite Informationen enthält, die mit dem T3346-Timer assoziiert sind, wobei die zweiten Informationen ein Backoff-Timer-Wert sind.

4. Verfahren nach Anspruch 3, das ferner Folgendes umfasst:
Starten des T3346-Timers basierend auf den zweiten Informationen, die mit dem T3346-Timer assoziiert sind.

5. Benutzergerät, UE, wobei das UE Folgendes umfasst:
einen Transceiver; und
einen Prozessor, der zu Folgendem konfiguriert ist:
Identifizieren, dass sich das UE im Leerlaufmodus über einen Nicht-3GPP(Partnerschaftsprojekt der 3. Generation)-Zugang befindet,
Empfangen einer Anzeige, die anzeigt, dass eine Zugangsschichtverbindung zwischen dem UE und einem Netzwerk über den Nicht-3GPP-Zugang hergestellt wurde, von dem Nicht-3GPP-Zugang,
Identifizieren, dass ein Backoff-Timer abgelaufen ist, wobei der Backoff-Timer ein T3346-Timer ist, der zuvor als Reaktion auf eine Dienstablehnungsnachricht über einen 3GPP-Zugang gestartet wurde, und
als Reaktion darauf, dass sich das UE im Leerlaufmodus befindet, die Anzeige und der T3346-Timer abgelaufen sind, Initiieren eines Dienstanforderungsverfahrens durch Übertragen einer Dienstanforderungsnachricht über den Nicht-3GPP-Zugang an eine Zugangs- und Mobilitätsfunktion, AMF,
wobei der T3346-Timer sowohl auf den 3GPP-Zugang als auch auf den Nicht-3GPP-Zugang angewendet wird, wenn das UE bei demselben öffentlichen terrestrischen Mobilfunknetz, PLMN, sowohl über den 3GPP-Zugang als auch über den Nicht-3GPP-Zugang registriert ist.

6. UE nach Anspruch 5, wobei der Prozessor zu Folgendem konfiguriert ist:
Übertragen einer ersten Dienstanforderungsnachricht vor dem Empfangen der Anzeige von dem Nicht-3GPP-Zugang an die AMF, und
Empfangen der Dienstablehnungsnachricht von der AMF, wenn die erste Dienstanforderungsnachricht nicht akzeptiert werden kann.

7. UE nach Anspruch 6,
wobei die Dienstablehnungsnachricht erste Informationen, die anzeigen, dass das Netzwerk überlastet ist, und zweite Informationen enthält, die mit dem T3346-Timer assoziiert sind, wobei die zweiten Informationen ein Backoff-Timer-Wert sind.

8. UE nach Anspruch 7, wobei der Prozessor zu Folgendem konfiguriert ist:
Starten des T3346-Timers basierend auf den zweiten Informationen, die mit dem T3346-Timer assoziiert sind.

## Revendications

1. Procédé d'un équipement utilisateur, UE, le procédé comprenant :
identifier que l'UE est en mode veille sur un accès de non-projet de partenariat de 3^{ème} génération, non-3GPP ;
recevoir, de l'accès non-3GPP, une indication indiquant qu'une connexion de strate d'accès a été établie entre l'UE et un réseau sur l'accès non-3GPP ;
identifier qu'un temporisateur d'attente est expiré, où le temporisateur d'attente est un temporisateur T3346 qui a été précédemment démarré en réponse à un message de rejet de service sur un accès 3GPP, et
en réponse au fait que l'UE est en mode veille, à l'indication, et au fait que le temporisateur T3346 est expiré, initier une procédure de requête de service en transmettant, à une fonction d'accès et de mobilité, AMF, un message de requête de service sur l'accès non 3GPP,
où le temporisateur T3346 est appliqué à la fois à l'accès 3GPP et à l'accès non 3GPP si l'UE est enregistré auprès d'un même réseau mobile terrestre public, PLMN, à la fois sur l'accès 3GPP et sur l'accès non 3GPP.

2. Procédé selon la revendication 1, comprenant en outre :
transmettre, à l'AMF, un message de requête de service initial avant de recevoir l'indication provenant de l'accès non 3GPP ; et
recevoir, de l'AMF, le message de rejet de service si le message de requête de service initial ne peut pas être accepté.

3. Procédé selon la revendication 2,
où le message de rejet de service inclut des premières informations indiquant que le réseau est encombré et des deuxièmes informations associées au temporisateur T3346, où les deuxièmes informations sont une valeur de temporisation d'attente.

4. Procédé selon la revendication 3, comprenant en outre :
démarrer le temporisateur T3346 sur la base des deuxièmes informations associées au temporisateur T3346.

5. Équipement utilisateur, UE, l'UE comprenant :
un émetteur-récepteur ; et
un processeur configuré pour :
identifier que l'UE est en mode veille sur un accès de non-projet de partenariat de 3^{ème} génération, non 3GPP,
recevoir, de l'accès non-3GPP, une indication indiquant qu'une connexion de strate d'accès a été établie entre l'UE et un réseau sur l'accès non-3GPP,
identifier qu'un temporisateur d'attente est expiré, où le temporisateur d'attente est un temporisateur T3346 qui a été précédemment démarré en réponse à un message de rejet de service sur un accès 3GPP, et
en réponse au fait que l'UE est en mode veille, à l'indication et au fait que le temporisateur T3346 est expiré, initier une procédure de requête de service en transmettant, à une fonction d'accès et de mobilité, AMF, un message de requête de service sur l'accès non 3GPP,
où le temporisateur T3346 est appliqué à la fois à l'accès 3GPP et à l'accès non 3GPP si l'UE est enregistré auprès d'un même réseau mobile terrestre public, PLMN, à la fois sur l'accès 3GPP et sur l'accès non 3GPP.

6. UE selon la revendication 5, où le processeur est configuré pour :
transmettre, à l'AMF, un message de requête de service initial avant de recevoir l'indication provenant de l'accès non 3GPP, et
recevoir, de l'AMF, le message de rejet de service si le message de requête de service initial ne peut pas être accepté.

7. UE selon la revendication 6,
où le message de rejet de service inclut des premières informations indiquant que le réseau est encombré et des deuxièmes informations associées au temporisateur T3346, où les deuxièmes informations sont une valeur de temporisation d'attente.

8. UE selon la revendication 7, où le processeur est configuré pour :
démarrer le temporisateur T3346 sur la base des deuxièmes informations associées au temporisateur T3346.
